(19) Europäisches Patentamt / European Patent Office / Office européen des brevets

(11) **EP 4 209 550 B1**

(12) **EUROPEAN PATENT SPECIFICATION**

(45) Date of publication and mention
of the grant of the patent:
**13.08.2025   Bulletin 2025/33**

(21) Application number: **21863998.7**

(22) Date of filing: **29.07.2021**

(51) International Patent Classification (IPC):
*C09J 175/06* (2006.01)   *C08G 18/08* (2006.01)
*C08G 18/10* (2006.01)   *C08G 18/32* (2006.01)
*C08G 18/34* (2006.01)   *C08G 18/42* (2006.01)
*C08G 18/46* (2006.01)   *C08G 18/66* (2006.01)
*C08G 18/76* (2006.01)   *C08G 18/75* (2006.01)
*C08F 283/00* (2006.01)

(52) Cooperative Patent Classification (CPC):
(C-Sets available)
**C09J 175/06; C08F 283/006; C08G 18/0823;
C08G 18/0828; C08G 18/10; C08G 18/3206;
C08G 18/348; C08G 18/4216; C08G 18/4238;
C08G 18/4277; C08G 18/4676; C08G 18/6625;
C08G 18/755; C08G 18/7621;** C08G 2170/80
(Cont.)

(86) International application number:
**PCT/JP2021/028101**

(87) International publication number:
**WO 2022/049940 (10.03.2022 Gazette 2022/10)**

(54) **AQUEOUS RESIN COMPOSITION AND ADHESIVE**

WÄSSRIGE HARZZUSAMMENSETZUNG UND KLEBSTOFF

COMPOSITION DE RÉSINE AQUEUSE, ET AGENT ADHÉSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.09.2020   JP 2020146687**

(43) Date of publication of application:
**12.07.2023   Bulletin 2023/28**

(73) Proprietor: **DIC Corporation
Tokyo 174-8520 (JP)**

(72) Inventors:
• **MIYAKE, Junichi
Takaishi-shi, Osaka 592-0001 (JP)**
• **YAMAMOTO, Shinya
Takaishi-shi, Osaka 592-0001 (JP)**

(74) Representative: **Kraus & Lederer PartGmbB
Thomas-Wimmer-Ring 15
80539 München (DE)**

(56) References cited:
EP-A1- 3 067 399        WO-A1-2015/098575
JP-A- 2002 542 351      JP-A- 2004 224 868
JP-A- 2016 531 169      JP-A- H07 506 855
JP-A- S6 137 807

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 283/006, C08F 236/08, C08F 220/325;
C08G 18/10, C08G 18/282**

**Description**

TECHNICAL FIELD

The present invention relates to an aqueous resin composition and an adhesive. The invention is set out in the appended set of claims.

BACKGROUND ART

An aqueous resin composition is used in various applications such as paper coating and impregnation, fiber and unwoven fabric, carpet, civil engineering and construction materials, mortar cement, automatic vehicle parts, tire cords, paint, paste, rust-preventive coating, adhesives, plastic modification, cosmetic puffs, electronic materials, adhesives (generally for rubbers), coating and impregnation (unwoven fabric and paper), fiber impregnation and reinforcing fiber processing (carpet and the like), moisture-proof and water-resistant coating, cement and mortar, construction material processing and wood-based adhesion, synthetic leather, artificial leather, gloves, contraceptive devices, ink receptors, and ink dispersants.

Various characteristics are required for the aqueous resin composition depending on the applications, and an aqueous resin composition obtained by combining different resins has been proposed. For example, PTL 1 describes an aqueous resin containing a blocked copolymer composed of a vinyl polymer segment and a polyurethane segment having an acid group and/or an acid group neutralized with a basic compound. In addition, PTL 2 describes a composition containing an aqueous polyurethane and a latex obtained by seed polymerization of a diene unsaturated monomer in the presence of a seed latex. PTL 3 describes a resin composition containing a hydrogenated derivative of a hydroxy group-containing conjugated diene polymer and other aqueous resins in the same micelle.

EP 3 067 399 A1 describes a processes for the manufacture of aqueous polyurethane/acrylic hybrid dispersions that can be used as adhesives or coatings, are solvent free and have low VOC emissions, and are environmentally friendly. Also describes are the dispersions as such, compositions containing them and their use as coatings and adhesives.

CITATION LIST

PATENT LITERATURE

    PTL 1: JPH06-199968A
    PTL 2: JP2004-231852A
    PTL 3: JP2004-224868A

SUMMARY OF INVENTION

TECHNICAL PROBLEM

The composite resin is expected to have both characteristics of the resins to be composited, and the use of the composite resin as an adhesive has been studied. However, during adhering of dissimilar base materials, for example, a rubber base material and a resin base material, an adhesive force of a composite resin in the related art may not be sufficiently satisfactory.

The invention has been made in view of the above problems, and an object of the invention is to provide an aqueous resin composition capable of exhibiting a strong adhesive force even during adhering of dissimilar base materials, for example, a rubber base material and a resin base material.

SOLUTION TO PROBLEM

The inventors have found that by using a combination of specific resins as a composite resin, although the composite resin is homogeneous during application, phase separation occurs between a plurality of resins contained in the composite resin during thermocompression bonding, and segregation occurs depending on the type of the base material so that the adhesive force can be improved, and have completed the invention.

That is, the aqueous resin composition of the invention, which is defined in claim 1, contains a composite resin (A) and an aqueous medium (B). The composite resin (A) contains a vinyl polymer (A1) and a urethane resin (A2). The vinyl polymer (A1) contains a unit derived from a conjugated diene compound. The composite resin (A) has a group capable of reacting with a -SH group. The urethane resin (A2) has a content of 1 part by mass or more and 100 parts by mass or less relative to 1 part by mass of the vinyl polymer (A1). The total content of the vinyl polymer (A1) and the urethane resin (A2) in the composite resin (A) is 70% by mass or more and the upper limit is 100% by mass. The content of the composite resin (A) in the aqueous resin composition is 20% by mass or more and is 60% by mass or less.

ADVANTAGEOUS EFFECTS OF INVENTION

By using the aqueous resin composition of the invention, a strong adhesive force can be exhibited even during adhering of dissimilar base materials, for example, a rubber base material and a resin base material.

DESCRIPTION OF EMBODIMENTS

An aqueous resin composition of the invention contains a composite resin (A) and an aqueous medium (B) as further defined in claim 1. The composite resin contains a vinyl polymer (A1) and a urethane resin (A2), and has a group capable of reacting with a -SH group. In the composite resin (A), at least one of the vinyl polymer (A1) and the urethane resin (A2) preferably has a group capable of reacting with a -SH group, and the vinyl polymer (A1) preferably has a group capable of reacting with a -SH group (hereinafter sometimes referred to as a "-SH reactive group").

A functional group value of the -SH reactive group in the composite resin (A) is preferably 2,000 g/mol or less, more preferably 1,500 g/mol or less, still more preferably 1,000 g/mol or less, and yet still more preferably 800 g/mol or less, and may be, for example, 50 g/mol or more or 100 g/mol or more. The functional group value of the -SH reactive group represents a theoretical value obtained by dividing the mass of the composite resin (A) by the molar amount of the contained -SH reactive group, and the amount of the -SH reactive group can be calculated from the charged amount.

The vinyl polymer (A1) represents a polymer having a unit derived from a vinyl monomer (a). The vinyl monomer (a) represents a compound having at least one polymerizable vinyl bond in one molecule. As the vinyl monomer (a), one type or two or more types may be used. The vinyl monomer (a) contains a conjugated diene compound (a1) and preferably contains a vinyl compound (a2) having a group capable of reacting with a -SH group (hereinafter, sometimes referred to as a "thiol reactive vinyl compound (a2)"), and may contain another vinyl compound (a3). When the vinyl monomer (a) contains the thiol reactive vinyl compound (a2), the composite resin (A) can have a group capable of reacting with a -SH group. In the invention, when the conjugated diene compound (a1) also corresponds to the thiol reactive vinyl compound (a2), the vinyl monomer (a) is treated as the conjugated diene compound (a1).

As the diene compound (a1), one type or two or more types may be used. Examples thereof include 1,3-butadiene, isoprene, 2,3-dimethyl-1,3-butadiene, 1,3-pentadiene, 1,3-hexadiene, 1,3-heptadiene, 2,3-dimethylbutadiene, 2-phenyl-1,3-butadiene, 3-methyl-1,3-pentadiene, and 2-chloro-1,3-butadiene.

The content of the conjugated diene compound (a1) in the total amount of the vinyl monomer (a) is preferably 1% by mass or more, more preferably 10% by mass or more, and still more preferably 30% by mass or more, and the upper limit thereof is 100% by mass.

The thiol reactive vinyl compound (a2) represents a compound having a group capable of reacting with a -SH group (hereinafter sometimes referred to as a "thiol reactive group") and a vinyl group. Examples of the thiol reactive group include: a blocked isocyanate group; a group having a vinyl group such as a (meth)acryloyl group, a vinyl group, an allyl group, a vinyloxy group, and an allyloxy group; a cyclic alkenyl group such as a norbornenyl group; and a cyclic ether group such as an oxiranyl group (epoxy group) and an oxetanyl group. The thiol reactive vinyl compound (a2) preferably has a cyclic alkenyl group or a cyclic ether group, and more preferably has a cyclic ether group.

The blocked isocyanate group represents an isocyanate group protected by a blocking agent. Examples of the blocking agent include an alcohol blocking agent, an alkyl phenol blocking agent, a phenol blocking agent, an active methylene blocking agent, a mercaptan blocking agent, an acid amide blocking agent, an acid imide blocking agent, an imidazole blocking agent, a urea blocking agent, an oxime blocking agent, an amine blocking agent, an imine blocking agent, a bisulfite blocking agent, a pyrazole blocking agent, and a triazole blocking agent.

Examples of the alcohol blocking agent include alcohol compounds such as methanol, ethanol, 2-propanol, n-butanol, sec-butanol, 2-ethyl-1-hexanol, 2-methoxyethanol, 2-etocasethanol, and 2-butoxyethanol.

Examples of the alkyl phenol blocking agent include: monoalkyl phenol compounds having, as a substituent, an alkyl group having 3 or more carbon atoms, such as n-propyl phenol, iso-propyl phenol, n-butyl phenol, sec-butyl phenol, t-butyl phenol, n-hexyl phenol, 2-ethylhexyl phenol, n-octyl phenol, and n-nonyl phenol; and dialkylphenol compounds having, as a substituent, an alkyl group having 3 or more carbon atoms, such as di-n-propyl phenol, diisopropyl phenol, isopropyl cresol, di-n-butyl phenol, di-t-butyl phenol, di-sec-butyl phenol, di-n-octyl phenol, di-2-ethylhexyl phenol, and di-n-nonyl phenol.

Examples of the phenol blocking agent include phenol, cresol, ethylphenol, styrenated phenol, and hydroxybenzoic acid ester.

Examples of the active methylene blocking agent include dimethyl malonate, diethyl malonate, methyl acetoacetate, ethyl acetoacetate, and acetyl acetone.

Examples of the mercaptan blocking agent include butyl mercaptan and dodecyl mercaptan.

Examples of the acid amide blocking agent include acetanilide, acetic acid amide, ε-caprolactam, δ-valerolactam, and γ-butyrolactam.

Examples of the acid imide blocking agent include succinic acid imide and maleic acid imide.

Examples of the imidazole blocking agent include imidazole and 2-methylimidazole.

Examples of the urea blocking agent include urea, thiourea, and ethylene urea.

Examples of the oxime blocking agent include formaldoxime, acetaldoxime, acetoxime, methyl ethyl ketoxime, and cyclohexanone oxime.

Examples of the amine blocking agent include diphenylamine, aniline, carbazole, di-n-propylamine, diisopropylamine, and isopropylethylamine.

Examples of the imine blocking agent include ethyleneimine and polyethyleneimine.

Examples of the bisulfite blocking agent include sodium bisulfite.

Examples of the pyrazole blocking agent include pyrazole, 3-methylpyrazole, and 3,5-dimethylpyrazole.

Examples of the triazole blocking agent include 3,5-dimethyl-1,2,4-triazole.

A blocking reaction of the isocyanate group can be performed in the presence of a solvent or in the absence of a solvent. In the blocking reaction, an organic metal salt of tin, zinc, lead, and the like, a tertiary amine compound, an alcoholate of an alkali metal such as sodium, and the like may be used as a catalyst.

The thiol reactive vinyl compound (a2) is preferably a vinyl compound having a cyclic alkenyl group such as norbornenyl (meth)acrylate, and a vinyl compound having a cyclic ether group such as oxiranyl (meth)acrylate, glycidyl (meth)acrylate, allyl glycidyl ether, tetrahydrofurfuryl (meth)acrylate, and oxetanyl (meth)acrylate.

The content of the thiol reactive vinyl compound (a2) in the total amount of the vinyl monomer (a) is preferably 1% by mass or more, more preferably 5% by mass or more, and still more preferably 10% by mass or more, and is preferably 100% by mass or less, more preferably 70% by mass or less, and still more preferably 50% by mass or less.

As the other vinyl compound (a3), one type or two or more types may be used. Examples of the other vinyl compound (a3) include: alkyl (meth)acrylates having 4 to 22 carbon atoms, such as methyl (meth)acrylate, ethyl (meth)acrylate, propyl (meth)acrylate, butyl (meth)acrylate, isobutyl (meth)acrylate, tert-butyl (meth)acrylate, pentyl (meth)acrylate, 3-methyl butyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, dodecyl (meth)acrylate, tridecyl (meth)acrylate, steallyl (meth)acrylate, isosteallyl (meth)acrylate, and hexadecyl (meth)acrylate;

cycloalkyl (meth)acrylates having 6 to 20 carbon atoms, such as cyclopentyl (meth)acrylate, cyclohexyl (meth)acrylate, and isobornyl (meth)acrylate;

allyl (meth)acrylates such as phenyl (meth)acrylate;

aralkyl (meth)acrylates having 10 to 20 carbon atoms, such as benzyl (meth)acrylate and phenethyl (meth)acrylate;

allyloxyalkyl (meth)acrylates such as phenoxyethyl (meth)acrylate;

crotonic acid alkyl esters such as methyl crotonate and ethyl crotonate;

unsaturated dicarboxylic acid alkyl esters such as dimethyl maleate, dibutyl maleate, dimethyl fumarate, dibutyl fumarate, dimethyl itaconate, and dibutyl itaconate;

aromatic vinyl monomers such as styrene, p-tert-butylstyrene, α-methylstyrene, vinyltoluene, vinylpyridine, chlorostyrene, and chloromethylstyrene;

nitrogen atom-containing monomers (preferably one substituted or two substituted (meth)acrylamides (including a compound in which a substituent is bonded and a ring is formed)), such as (meth)acrylonitrile, crotononitrile, (meth)acrylamide, N-methyl (meth)acrylamide, N-isopropyl (meth)acrylamide, N-hydroxyethyl (meth)acrylamide, N-methylol (meth)acrylamide, N-methoxyethyl (meth)acrylamide, N,N-dimethyl (meth)acrylamide, N,N-diethyl (meth)acrylamide, N,N-dimethylaminoethyl (meth)acrylate, N,N-dimethylaminopropyl (meth)acrylamide, N,N-diethylaminoethyl (meth)acrylate, N,N-diethylaminopropyl (meth)acrylate, N-(meth)acryloylmorpholine, N-(meth)acryloylpyrrolidine, N-vinylformamide, N-vinylpyrrolidone, N-vinylimidazole, N-vinylcarbazole, N-vinylquinoline, and N-vinylpiperidine, and methyl chloride salts of the nitrogen atom-containing monomers;

halogenated olefins such as vinyl fluoride, vinylidene fluoride, tetrafluoroethylene, chlorotrifluoroethylene, hexafluoropropylene, vinyl chloride, and vinylidene chloride; α-olefins such as ethylene, propylene, isobutylene, and 1-butene;

carboxylic acid vinyl esters such as vinyl acetate, vinyl propionate, vinyl pivalate, vinyl versatate, vinyl benzoate, and vinyl neodecanoate;

alkyl vinyl ethers such as methyl vinyl ether, ethyl vinyl ether, n-butyl vinyl ether, and isobutyl vinyl ether; cycloalkyl vinyl ethers such as cyclohexyl vinyl ether;

carbonyl group-containing monomers such as acrolein and methyl vinyl ketone;

polyoxyethylene group-containing (meth)acrylic monomer such as polyethylene glycol (meth)acrylate, methoxy polyethylene glycol (meth)acrylate, polyethylene glycol polypropylene glycol copolymerized (meth)acrylate, methoxy polyethylene glycol polypropylene glycol copolymerized (meth)acrylate, polyethylene glycol polytetramethylene glycol copolymerized (meth)acrylate, and methoxy polyethylene glycol polytetramethylene glycol copolymerized (meth)acrylate;

fluoroalkyl group-containing monomers such as perfluorocyclohexyl (meth)acrylate, di-perfluorocyclohexyl fumarate, and N-isopropyl fluorooctane sulfonic acid amide ethyl (meth)acrylate;

unsaturated dicarboxylic acid anhydrides such as maleic anhydride, citraconic anhydride, mesaconic anhydride, itaconic anhydride, and tetrahydrophthalic anhydride;

silyl group-containing monomers such as vinyltrichlorosilane, vinyltriethoxysilane, vinyl tris($\beta$-methoxyethoxy)silane, and $\gamma$-(meth)acryloxypropyltrimethoxysilane;

hydroxy group-containing monomers such as 2-hydroxyethyl (meth)acrylate, 2-hydroxypropyl (meth)acrylate, 2-hydroxybutyl (meth)acrylate, 4-hydroxybutyl (meth)acrylate, 2-hydroxyethyl vinyl ether, 4-hydroxybutyl vinyl ether, and 2-hydroxyethyl allyl ether; and

vinyl group-containing sulfonic acid compounds such as vinyl sulfonic acid, 3-acryloxypropane-1-sulfonic acid, 3-acryloxyoctyloxybenzene sulfonic acid, 3-acryloxybenzene diazosulfonic acid, 3-acryloxyazobenzene-4'-sulfonic acid, 2-acryloylamino-2-methylpropane-1-sulfonic acid, 2-acryloylamide-2-methylpropane sulfonic acid, and acrylonitrile-tert-butyl sulfonic acid, and salts thereof.

The content of the other vinyl compound (a3) in the total amount of the vinyl monomer (a) is preferably 1% by mass or more, more preferably 5% by mass or more, and still more preferably 10% by mass or more, and is preferably 80% by mass or less, more preferably 60% by mass or less, and still more preferably 50% by mass or less.

The total content of the conjugated diene compound (a1), the thiol reactive vinyl compound (a2), and the other vinyl compound (a3) in the total amount of the vinyl monomer (a) is preferably 70% by mass or more, more preferably 80% by mass or more, and still more preferably 90% by mass or more, and is preferably 100% by mass or less.

A glass transition temperature of the vinyl polymer (A1) is preferably -100°C or higher, more preferably -80°C or higher, and is preferably 120°C or lower, more preferably 100°C or lower, still more preferably 50°C or lower, and yet still more preferably 25°C or lower.

A glass transition temperature Tg(A1) of the vinyl polymer (A1) represents a value obtained by converting a glass transition temperature Tga at an absolute temperature obtained by the following formula (FOX formula) into degrees Celsius.

$$1/Tga = \Sigma(Wi/Tgi)$$

In the above formula, Tga represents a glass transition temperature (unit: absolute temperature) of the polymer composed only of vinyl monomers (a) used for synthesizing the vinyl polymer (A1). Wi represents a mass ratio of vinyl monomers (a) in a raw material of the vinyl polymer (A1). Tgi represents a glass transition temperature (unit: absolute temperature) of a homopolymer composed only of vinyl monomers (a).

Details of the FOX formula are described in Bulletin of the American Physical Society, Series 2, volume 1, No.3, page 123 (1956). In addition, as the glass transition temperature (Tgi) of the homopolymer of various monomers to be calculated by the FOX formula, for example, numerical values described in coating and paint (Paint publisher, 10 (No.358), 1982) can be adopted.

The content of the vinyl polymer (A1) in the composite resin (A) is preferably 0.1% by mass or more, more preferably 1% by mass or more, still more preferably 10% by mass or more, yet still more preferably 20% by mass or more, and particularly preferably 30% by mass or more, and is preferably 90% by mass or less, more preferably 70% by mass or less, still more preferably 60% by mass or less, and yet still more preferably 50% by mass or less.

The urethane resin (A2) is a resin having a urethane bond in a molecule thereof, and is preferably a reaction product of a polyol (b1), a polyisocyanate (b2), and a chain extender (b3) used as necessary. When the chain extender (b3) is used, the urethane resin (A2) can be obtained as a reaction product of the chain extender (b3) and the reaction product of the polyol (b1) and the polyisocyanate (b2). The urethane resin (A2) may have a group capable of reacting with a -SH group.

As a method of introducing a group capable of reacting with a -SH group into the urethane resin (A2), the urethane resin (A2) can be produced by introducing a hydroxy group into a urethane resin having a sulfonic acid group, which is obtained by using a polyol having a sulfonic acid group described later as the polyol (b1), and subjecting a (meth)acrylic compound having a glycidyl group, such as glycidyl (meth)acrylate, to Michael addition.

As the polyol (b1), one type or two or more types may be used. Examples thereof include a polyether polyol, a polyester polyol, a polycarbonate polyol, and a polyolefin polyol. The polyol (b1) preferably includes a polymer polyol (having a number average molecular weight of 500 or more, preferably 3,000 or less) such as a polyester polyol and a polycarbonate polyol, and may include a polyol having a hydrophilic group or a low molecular weight polyol (having a number average molecular weight of less than 500, preferably 50 or more) as necessary.

Examples of the polyether polyol include those obtained by addition polymerization (ring-opening polymerization) of alkylene oxide using, as an initiator, one type or two or more types of compounds having 2 or more active hydrogen atoms.

Examples of the initiator include: linear diols such as ethylene glycol, diethylene glycol, triethylene glycol, trimethylene glycol, 1,2-propanediol, 1,3-propanediol, 1,3-butanediol, 1,4-butanediol, and 1,6-hexanediol; branched-chain diols such as neopentyl glycol; triols such as glycerin, trimethylolethane, trimethylolpropane, and pyrogallol; polyols such as sorbitol, sucrose, and aconite sugar; tricarboxylic acids such as aconitic acid, trimellitic acid, and hemimellitic acid; phosphoric acids; polyamines such as ethylenediamine and diethylenetriamine; triisopropanol amines; phenolic acids such as dihydroxybenzoic acid and hydroxyphthalic acid; and 1,2,3-propane trithiol.

Examples of the alkylene oxide include ethylene oxide, propylene oxide, butylene oxide, styrene oxide, epichlorohydrin, and tetrahydrofuran.

As the polyether polyol, a polyoxytetramethylene glycol obtained by addition polymerization (ring-opening polymerization) of tetrahydrofuran with the initiator is preferably used.

Examples of the polyester polyol include: a polyester polyol obtained by an esterification reaction of a low molecular weight polyol (for example, a polyol having a molecular weight of 50 or more and 300 or less) and a polycarboxylic acid; a polyester polyol obtained by a ring-opening polymerization reaction of a cyclic ester compound such as ε-caplolactone; and a copolymerized polyester polyol thereof.

As the low molecular weight polyol, a polyol having a molecular weight of 50 or more and 300 or less can be used. Examples thereof include: aliphatic polyols having 2 or more and 6 or less carbon atoms, such as ethylene glycol, propylene glycol, 1,4-butanediol, 1,5-pentanediol, 1,6-hexanediol, 3-methyl-1,5-pentanediol, diethylene glycol, dipropylene glycol, neopentyl glycol, and 1,3-butanediol; alicyclic structure-containing polyols such as 1,4-cyclohexanediol and cyclohexanedimethanol; and aromatic structure-containing polyols such as bisphenol compounds such as bisphenol A and bisphenol F, and alkylene oxide adducts thereof.

Examples of the polycarboxylic acid include: aliphatic polycarboxylic acids such as succinic acid, adipic acid, sebacic acid, and dodecanedicarboxylic acid; aromatic polycarboxylic acids such as terephthalic acid, isophthalic acid, phthalic acid, and naphthalene dicarboxylic acid; and anhydrides or ester-forming derivatives of the aliphatic polycarboxylic acids and the aromatic polycarboxylic acids.

Examples of the polycarbonate polyol include: a reaction product of a carbonic acid ester and a polyol; and a reaction product of phosgene, bisphenol A, and the like.

Examples of the carbonic acid ester include methyl carbonate, dimethyl carbonate, ethyl carbonate, diethyl carbonate, cyclocarbonate, and diphenyl carbonate.

Examples of the polyol capable of reacting with the carbonic acid ester include: polyols exemplified as the low molecular weight polyol; and high molecular weight polyols (for example, which has a weight average molecular weight of 500 or more and 5,000 or less) such as a polyether polyol (such as polyethylene glycol or polypropylene glycol) and a polyester polyol (such as polyhexamethylene adipate).

Examples of the polyolefin polyol include a polyisobutene polyol, a hydrogenated polybutadiene polyol, and a hydrogenated polyisoprene polyol.

The total content of the polymer polyols (preferably polyether polyol, polyester polyol, polycarbonate polyol, and polyolefin polyol) that fall within the polyol (b2) is preferably 30% by mass or more, more preferably 40% by mass or more, and is preferably 100% by mass or less in the polyol (b2).

Examples of the hydrophilic group contained in the polyol having a hydrophilic group include an anionic group, a cationic group, and a nonionic group. By using the polyol having a hydrophilic group, the water dispersibility of the composite resin (A) can be improved. As the polyol having a hydrophilic group, for example, a polyol other than the polyether polyol, the polyester polyol, the polycarbonate polyol, and the polyolefin polyol can be used. Specifically, a polyol having an anionic group, a polyol having a cationic group, and a polyol having a nonionic group can be used. Among them, it is preferable to use a polyol having an anionic group or a polyol having a cationic group.

Examples of the polyol having an anionic group include a polyol having a carboxy group and a polyol having a sulfonic acid group.

Examples of the polyol having a carboxy group include: hydroxy acids such as 2,2-dimethylol propionic acid, 2,2-dimethylol butanoic acid, 2,2-dimethylol butyric acid, and 2,2-dimethylol valeric acid; and a reaction product of the polyol having a carboxy group and the polycarboxylic acid. The hydroxy acid is preferably 2,2-dimethylol propionic acid.

Examples of the polyol having a sulfonic acid group include: dicarboxylic acids having a sulfonic acid group, such as 5-sulfoisophthalic acid, sulfoterephthalic acid, 4-sulfophthalic acid, and 5-(4-sulfophenoxy)isophthalic acid; and a polyester polyol obtained by reacting a salt of the dicarboxylic acid with the aromatic structure-containing polyol.

Examples of the polyol having a cationic group include N-methyl-diethanolamine, and polyols having a tertiary amino group, such as a polyol obtained by reacting a compound having two epoxy groups per molecule with a secondary amine.

Examples of the polyol having a nonionic group include a polyol having a polyoxyethylene structure.

When a polyol having a hydrophilic group falls within the polyol (b2), the content thereof is preferably 0.3 parts by mass or more, more preferably 1 part by mass or more, still more preferably 2% by mass or more, and particularly preferably 5% by mass or more, and is preferably 30 parts by mass or less, more preferably 20 parts by mass or less, and still more preferably 10 parts by mass or less, relative to a total 100 parts by mass of the polyol (b2).

Examples of the low molecular weight polyol include: alkanediols such as ethylene glycol, diethylene glycol, 1,2-propylene glycol, dipropylene glycol, neopentyl glycol, 2-butyl-2-ethyl-1,3-propanediol, 1,4-butanediol, 1,5-pentanediol, 3-methyl-1,5-pentanediol, 1,4-cyclohexanediol, and 1,6-hexanediol; cycloalkanedialkanols such as cyclohexanedimethanol; and polyols having a polymerizable unsaturated group.

Examples of the polyol having a polymerizable unsaturated group include a compound represented by the following formula (1) and a compound represented by the following formula (2).

[Chem. 1]

$$HO-R^1-OH \qquad (1)$$

[In the formula (1), $R^1$ represents a linear alkylene group having a side chain having an atomic group containing a polymerizable unsaturated group.]

[Chem. 2]

$$HO-R^1O-R^2-OR^3-OH \qquad (2)$$

[In the formula (2), $R^1$ and $R^3$ each may independently have a side chain having an atomic group containing a polymerizable unsaturated group, and the total number of the atomic groups containing the polymerizable unsaturated group, which are contained in $R^1$ and $R^3$, is one or more. $R^2$ represents an alkylene group having 1 to 20 carbon atoms.]

Examples of the atomic group containing a polymerizable unsaturated group include a vinyl group, a vinyloxy group, and a (meth)acryloyl group. $R^1$ and $R^3$ may have a side chain having a hydroxy group in addition to a side chain having an atomic group containing a polymerizable unsaturated group.

Examples of the linear alkylene group represented by $R^1$ and $R^3$ include a methylene group, an ethylene group, a propylene group, a butanediyl group, a pentanediyl group, a hexanediyl group, a heptanediyl group, an octanediyl group, and a nonanediyl group. The number of carbon atoms of the linear alkylene group is 1 or more, preferably 2 or more, and is, for example, 50 or less, preferably 20 or less, more preferably 6 or less, more preferably 5 or less, and particularly preferably 2.

In the compound represented by the formula (1) and the compound represented by the formula (2), the number of side chains having an atomic group containing a polymerizable unsaturated group per molecule is 1 or more, preferably 2 or more, and is, for example, 10 or less, and preferably 5 or less.

Examples of the compound represented by the formula (1) include pentaerythritol (meth)acrylate, pentaerythritol di(meth)acrylate [dimethylolpropane di(meth)acrylate], trimethylolmethane (meth)acrylate, dimethylolmethane di(meth)acrylate, triethylolmethane (meth)acrylate, diethylolmethane di(meth)acrylate, triethylolpropane (meth)acrylate, diethylolpropane di(meth)acrylate, tripropanol (meth)acrylate, dipropanolmethane di(meth)acrylate, tripropanolpropane (meth)acrylate, dipropanolpropane di(meth)acrylate, tributanolmethane (meth)acrylate, dibutanolmethane di(meth)acrylate, tributanolpropane (meth)acrylate, and dibutanolpropane di(meth)acrylate.

Examples of the compound represented by the formula (2) include bis(3-acryloyloxy-2-hydroxypropoxy)methane, 1,2-bis(3-acryloyloxy-2-hydroxypropoxy)eta, 1,3-bis(3-acryloyloxy-2-hydroxypropoxy)propane, 1,4-bis(3-acryloyloxy-2-hydroxypropoxy)butane, and 1,5-bis(3-acryloyloxy-2-hydroxypropoxy)pentane.

As the polyisocyanate (b2), one type or two or more types may be used. Examples thereof include: aromatic polyisocyanates such as 4,4'-diphenylmethane diisocyanate, 2,4'-diphenylmethane diisocyanate, carbodiimide modified diphenylmethane diisocyanate, crude diphenylmethane diisocyanate, phenylene diisocyanate, triene diisocyanate, naphthalene diisocyanate, xylylene diisocyanate, and tetramethylxylylene diisocyanate; aliphatic polyisocyanates such as hexamethylene diisocyanate and lysine diisocyanate; and alicyclic structure-containing polyisocyanates such as cyclohexane diisocyanate, hydrogenated xylylene diisocyanate, isophorone diisocyanate, and dicyclohexylmethane diisocyanate.

A molar ratio (NCO/OH) of -NCO contained in the polyisocyanate (b2) to -OH contained in the polyol (b1) is preferably 0.3 or more, more preferably 0.5 or more, and still more preferably 0.8 or more, and is preferably 5.0 or less, more preferably 3.0 or less, and still more preferably 2.0 or less.

As the chain extender (b3), one type or two or more types may be used. Examples thereof include: diamines such as ethylene diamine, 1,2-propane diamine, 1,6-hexamethylene diamine, isophorone diamine, 4,4'-dicyclohexyl methane diamine, 3,3'-dimethyl-4,4'-dicyclohexyl methane diamine, and 1,4-cyclohexane diamine; N-hydroxymethyl aminoethylamine, N-hydroxyethyl aminoethylamine, N-hydroxypropyl aminopropylamine, N-ethyl aminoethylamine, and N-methyl aminopropylamine; polyamines such as diethylenetriamine, dipropylenetriamine, and triethylenetetramine; hydrazine compounds such as hydrazine, N,N'-dimethylhydrazine, 1,6-hexamethylenebishydrazine, succinic acid dihydrazide, adipic acid dihydrazide, glutaric acid dihydrazide, sebacic acid dihydrazide, isophthalic acid dihydrazide; β-semicarbazide propionic acid hydrazide; cyclic polyamines such as piperazine and 2,5-dimethylpiperazine; glycols such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; and phenols such as bisphenol A, 4,4'-dihydroxydiphenyl, 4,4'-dihydroxydiphenyl ether, 4,4'-dihydroxydiphenyl sulfone, hydrogenated bisphenol A, and hydroquinone, and water.

The urethane resin (A2) may be a reaction product of the polyol (b1), the polyisocyanate (b2), the chain extender (b3) used as necessary, and an alcohol compound (b4) having a polymerizable unsaturated group.

The number of polymerizable unsaturated groups contained in the alcohol compound (b4) having a polymerizable unsaturated group is 1 or more, and is, for example, 20 or less, preferably 15 or less, and more preferably 10 or less.

Examples of the alcohol compound (b4) having a polymerizable unsaturated group include: monoalcohol compounds; hydroxyalkyl (meth)acrylates (the number of carbon atoms of the hydroxyalkyl group is, for example, 2 to 10, preferably 2 to 5) such as hydroxyethyl (meth)acrylate, hydroxypropyl (meth)acrylate, and hydroxybutyl (meth) acrylate; di(meth)acrylate compounds of triols, such as trimethylolpropane di(meth)acrylate and glycerol di(meth) acrylate; tri(meth)acrylate compounds of tetraols, such as pentaerythritol tri(meth)acrylate and ditrimethylolpropane tri(meth)acrylate; polyalkoxy (preferably polyethoxy, polypropoxy, and the like) compounds such as a di(meth)acrylate compound of the triol and a tri(meth)acrylate compound of the tetraol; and blocked copolymer equivalents such as a di(meth)acrylate compound of the triol and a tri(meth)acrylate compound of the tetraol.

When the urethane resin (A2) has an anionic group, the aqueous resin composition may contain a basic compound. Examples of the basic compound include: organic amines such as ammonia, triethylamine, morpholine, monoethanolamine, and diethyl ethanol amine; and metal hydroxides containing sodium hydroxide, potassium hydroxide, lithium hydroxide, and the like. From the viewpoint of improving the aqueous dispersion stability of the aqueous resin composition, the molar ratio of the basic compound to the anionic group (basic group/anionic group) is preferably 0.5 or more and 3.0 or less, and more preferably 0.8 or more and 2.0 or less.

When the urethane resin (A2) has an anionic group, the acid value of the urethane resin (A2) is preferably 0.1 mgKOH/g or more, more preferably 5 mgKOH/g or more, and still more preferably 10 mgKOH/g or more, and is preferably 100 mgKOH/g or less, more preferably 70 mgKOH/g or less, and still more preferably 50 mgKOH/g or less.

The acid value in the present specification is a theoretical value calculated as the number of mg of potassium hydroxide required to neutralize 1 g of the urethane resin (A2) based on the calculated amount of the anionic group contained in the urethane resin (A2) based on the raw material composition.

When the urethane resin (A2) has a cationic group, the aqueous resin composition may contain: a carboxylic acid such as formic acid, acetic acid, propionic acid, succinic acid, glutaric acid, and adipic acid; a hydroxy acid such as tartaric acid; and an acidic compound such as phosphoric acid. A part or all of the tertiary amino groups as the cationic group may be quaternized with a quaternizing agent such as dimethyl sulfate, diethyl sulfate, methyl chloride, and ethyl chloride.

When the urethane resin (A2) has a cationic group, the amine value of the urethane resin (A2) is preferably 2 mgKOH/g or more and 50 mgKOH/g or less, and more preferably 5 mgKOH/g or more and 30 mgKOH/g or less.

The amine value in the present specification is a theoretical value calculated as a product of the number of moles (mmol) of hydrogen chloride and the amount of potassium hydroxide (56.1 g/mol) required to neutralize 1 g of the urethane resin (A2) based on the calculated amount of the cationic group contained in the urethane resin (A2) based on the raw material composition.

The amount of urea bonding groups in the urethane resin (A2) is, for example, 1.0 mol/g or less, preferably 0.1 mol/g or less, and more preferably 0.01 mol/g or less, and the lower limit is 0 mol/g. The amount of urea bonding groups can be calculated as a theoretical value based on the raw materials used in the synthesis of the urethane resin (A2).

The weight average molecular weight of the urethane resin (A2) is preferably 3,000 or more, more preferably 5,000 or more, still more preferably 10,000 or more, yet still more preferably 30,000 or more, and is preferably 1,000,000 or less, more preferably 500,000 or less, and still more preferably 300,000 or less.

In the present specification, the weight average molecular weight and the number average molecular weight can be measured by gel permeation chromatography (GPC) using polystyrene as a standard sample, unless otherwise specified.

The glass transition temperature of the urethane resin (A2) is preferably -80°C or higher, more preferably -50°C or higher, and still more preferably -20°C or higher, and is preferably 120°C or lower, more preferably 100°C or lower, and still more preferably 80°C or lower. When the glass transition temperature of the urethane resin (A2) is within the above range, the mobility of the urethane resin (A2) is good, and the effect of the invention is easily exhibited.

A difference (Tg(A2) - Tg(A1)) between a glass transition temperature Tg(A2) of the urethane resin (A2) and the glass transition temperature Tg(A1) of the vinyl polymer (A1) is -40°C or higher, preferably -30°C or higher, more preferably -20°C or higher, and still more preferably 0°C or higher, and is 140°C or lower, preferably 130°C or lower, more preferably 120°C or lower, still more preferably 100°C or lower, yet still more preferably 90°C or lower, and particularly preferably 80°C or lower. When the difference between the glass transition temperatures is in the range (Tg(A2) - Tg(A1)), the balance between the mobility of the urethane resin (A2) and the mobility of the vinyl polymer (A1) is good, and a coating film having a hydrophobic surface can be formed by heating.

The glass transition temperature of the urethane resin (A2) can be measured by a differential scanning calorimeter (DSC).

The content of the urethane resin (A2) relative to 1 part by mass of the vinyl polymer (A1) is 1 part by mass or more, and is 100 parts by mass or less, preferably 10 parts by mass or less, and more preferably 3 parts by mass or less.

The total content of the vinyl polymer (A1) and the urethane resin (A2) in the composite resin (A) is 70% by mass or more, preferably 80% by mass or more, and more preferably 90% by mass or more, and the upper limit is 100% by mass.

The gel fraction of the composite resin (A) is preferably 0.01% by mass or more, more preferably 1% by mass or more, still more preferably 3% by mass or more, and yet still more preferably 10% by mass or more, and the upper limit is 100% by mass, for example, is allowed to be 90% by mass or less, and more preferably 80% by mass or less.

The gel fraction of the composite resin (A) can be measured, for example, by the following method. First, the aqueous resin composition of the invention is applied onto a glass plate such that a film thickness after drying is 0.5 mm, dried at 80°C for 2 hours, followed by being peeled off from the glass plate, further dried at 140°C for 5 minutes, and then cut into a circle having a diameter of 29 mm to obtain a sample. The weight of the sample before immersion in a solvent is measured and defined as G1. Next, after the sample is immersed in toluene at a room temperature for 24 hours, a solvent-insoluble component of the sample is separated by filtration through an 80-mesh wire mesh, dried at 110°C for 1 hour, and then weighed and defined as G2. The value obtained based on the following formula is defined as the gel fraction.

$$\text{Gel fraction (\% by mass)} = (G2/G1) \times 100$$

In the composite resin (A), at least a part of the surface of the vinyl polymer (A1) is preferably covered with the urethane resin (A2), and a layer of the urethane resin (A2) is preferably formed on the surface of the vinyl polymer (A1). The vinyl polymer (A1) generally has high hydrophobicity and is difficult to be dispersed in water as it is, but since the urethane resin (A2) covers at least a part of the surface of the vinyl polymer (A1), dispersibility in an aqueous medium is improved. The vinyl polymer (A1) and the urethane resin (A2) may or may not be chemically bonded.

The composite resin can be produced by polymerizing the vinyl monomers (a) in the aqueous medium (B) described below in the presence of the urethane resin (A2). Since the vinyl monomer (a) is hydrophobic, when the vinyl monomer (a) coexists with the urethane resin (A2) in the aqueous medium (B), at least a part of the vinyl monomers (a) is incorporated into the urethane resin (B2), and a polymerization reaction is performed in this state, and whereby the composite resin (A) of the invention can be produced.

More specifically, the urethane resin (A2) is preferably subjected to polymerization of the vinyl monomer (a) in a state (preliminary dispersion liquid) of being dispersed in the aqueous medium (B). The preliminary dispersion liquid obtained by dispersing the urethane resin (A2) in the aqueous medium (B) can be produced, for example, by reacting the polyol (b1) and the polyisocyanate (b2) in the absence of a solvent or in the presence of an organic solvent, and further reacting the chain extender (b3) as necessary. The organic solvent may be partially or entirely removed by distillation under a reduced pressure and the like during or after the production of the urethane resin (A2) from the viewpoints of safety and environmental load reduction.

During the polymerization reaction, if necessary, an additive (C) described later may coexist, and the additive (C) may be added after the polymerization reaction.

When the vinyl monomer (a) is polymerized, a radical polymerization initiator is preferably allowed to coexist. As the polymerization initiator, a photopolymerization initiator and a thermal polymerization initiator can be used. Examples of the photopolymerization initiator include benzophenone, benzyl, Michler's ketone, thioxanthone, anthraquinone, benzoin, dialkoxyacetophenone, acyloxime esters, benzyl ketal, hydroxyalkyl phenone, and halogenoketone. The photopolymerization initiator may be used in combination with a tertiary amine such as methyl amine, diethanolamine, N-methyldiethanolamine, and tributylamine, if necessary. Examples of the thermal polymerization initiator include: azo compounds such as 2,2'-azobis(isobutyronitrile), 2,2'-azobis(2-methylbutyronitrile), 2,2'-azobis(2-methylpropionamidine) dihydrochloride, 4,4'-azobis(4-cyano) valeric acid, and 2,2'-azobis(2-amidinopropane) dihydrochloride; organic peroxides such as benzoyl peroxide, tert-butyl hydroperoxide, tert-butyl peroxypivalate, tert-butyl peroxybenzoate, tert-butyl peroxy-2-ethylhexanoate, di-tert-butyl peroxide, di-tert-butyl hydroperoxide, cumene hydroperoxide, benzoyl peroxide, lauroyl peroxide, decanoyl peroxide, tert-butyl cumyl peroxide, dicumyl peroxide, tert-butyl peroxylaurate, tert-butyl peroxybenzoate, cumene hydroperoxide, and paramentane hydroperoxide; and inorganic peroxides such as hydrogen peroxide, ammonium persulfate, potassium persulfate, and sodium persulfate.

The amount of the radical polymerization initiator relative to a total 100 parts by mass of the vinyl compound is preferably 0.01 parts by mass or more, more preferably 0.1 parts by mass or more, and still more preferably 0.5 parts by mass or more, and is preferably 20 parts by mass or less, more preferably 10 parts by mass or less, and still more preferably 5 parts by mass or less.

The composite resin (A) is preferably dispersed in the aqueous medium (B). A dispersion state of the composite resin (A) can be found by, for example, the presence or absence of a precipitate in the aqueous resin composition.

The content of the composite resin (A) in the aqueous resin composition is 20% by mass or more, and preferably 30% by mass or more, and is 60% by mass or less, and preferably 50% by mass or less.

Examples of the aqueous medium (B) include water, an organic solvent miscible with water, and a mixture thereof. As the organic solvent miscible with water, one type or two or more types may be used. Examples thereof include: alcohol solvents such as methanol, ethanol, n-propanol, isopropyl alcohol, 1,2-propylene glycol, and 1,3-butylene glycol; ketone solvents such as acetone and methyl ethyl ketone; glycol ether solvents such as ethylene glycol-n-butyl ether, diethylene glycol-n-butyl ether, diethylene glycol monoethyl ether acetate, diethylene glycol dimethyl ether, propylene glycol methyl ether, dipropylene glycol methyl ether, dipropylene glycol dimethyl ether, dipropylene glycol-n-butyl ether, and tripropylene glycol methyl ether; lactam solvents such as N-methyl-2-pyrrolidone and N-ethyl-2-pyrrolidone; and amide solvents such as N,N-dimethylformamide. An alcohol solvent is preferred.

In consideration of safety and environmental load reduction, the aqueous medium (B) is preferably water alone, or a mixture of water and an organic solvent miscible with water, and more preferably water alone. The content of water relative to 100% by mass of the aqueous medium (B) is preferably 50% by mass or more, more preferably 60% by mass or more, and still more preferably 70% by mass or more, and the upper limit is 100% by mass.

The content of the aqueous medium (B) relative to 100% by mass of the total amount of the aqueous resin composition is preferably 30% by mass or more and 80% by mass or less, and more preferably 50% by mass or more and 70% by mass or less.

The aqueous resin composition of the invention may further contain various additives (C) such as a crosslinking agent, a surfactant, a plasticizer, an antistatic agent, a wax, a light stabilizer, a flow modifier, a dye, a leveling agent, a rheology control agent, an ultraviolet absorber, an antioxidant, a photocatalytic compound, an inorganic pigment, an organic pigment, an extender pigment, a curing agent, a curing catalyst, an emulsifier, and a dispersion stabilizer.

The content of the additive (C) relative to 100 parts by mass of the composite resin (A) is preferably 20 parts by mass or less, more preferably 10 parts by mass or less, and still more preferably 1 part by mass or less.

The aqueous resin composition of the invention can exhibit a strong adhesive force even during adhering of dissimilar base materials, for example, a rubber base material and a resin base material, and can be used widely as an adhesive (preferably an adhesive between the dissimilar base materials).

Examples

Hereinafter, the invention will be described in more detail with reference to Examples, but the invention is not limited by the following Examples.

(Synthesis Example 1: Synthesis of Polyester Polyol (1))

While introducing nitrogen gas into a reaction vessel equipped with a thermometer, a nitrogen gas introduction tube, and a stirrer, 24.8 parts by mass of 1,6 hexanediol, 20.1 parts by mass of dimethyl 5-sulfoisophthalate sodium, 62.0 parts by mass of ε-caplolactone, and 0.02 parts by mass of tetraisopropyl titanate were charged, and a polycondensation reaction was performed at 180°C to 230°C for 12 hours until the acid value became 1 or less, thereby obtaining a polyester polyol (1) [acid value: 0.3 mgKOH/g, hydroxyl value: 145.0 mgKOH/g].

(Synthesis Example 2: Synthesis of Polyester Polyol (2))

While introducing nitrogen gas into a reaction vessel equipped with a thermometer, a nitrogen gas introduction tube, and a stirrer, 49.4 parts by mass of 1,4 butanediol, 71.1 parts of adipic acid, and 0.01 parts by mass of tetraisopropyl titanate were charged, and a polycondensation reaction was performed at 180°C to 230°C for 12 hours until the acid value became 1 or less, thereby obtaining a polyester polyol (2) [acid value: 0.3 mgKOH/g, hydroxyl value: 56.0 mgKOH/g].

(Synthesis Example 3: Synthesis of Polyester Polyol (3))

While introducing nitrogen gas into a reaction vessel equipped with a thermometer, a nitrogen gas introduction tube, and a stirrer, 35.4 parts of isophthalic acid, 17.8 parts of sebacic acid, 7.8 parts of adipic acid, 6.2 parts of ethylene glycol, 22.9 parts of neopentyl glycol, 11.7 parts of 1,6-hexanediol, and 0.03 parts of dibutyltin oxide were charged, and a polycondensation reaction was performed at 180°C to 230°C for 24 hours until the acid value became 1 or less, thereby obtaining a polyester polyol (3) [acid value: 0.6 mgKOH/g, hydroxyl value: 42.5 mgKOH/g].

(Production Example 1: Synthesis of Urethane Resin (1))

In a reaction vessel, 10.0 parts by mass of methyl ethyl ketone was added to 8.0 parts by mass of the polyester polyol (1) of Synthesis Example 1, the mixture was stirred and uniformly mixed, then 6.1 parts by mass of isophorone diisocyanate was added, and a reaction was performed at 80°C for 3 hours. After the reaction, 8.6 parts by mass of the polyester polyol (2) of Synthesis Example 2 and 7.2 parts by mass of methyl ethyl ketone were added, and a reaction was performed at 80°C for 6 hours to perform a urethanation step. After finding that the isocyanate value became 0.1% or less, 0.1 parts by mass of n-butanol was added, a reaction was further performed for 2 hours, followed by cooling to 50°C, and an organic solvent solution of a urethane prepolymer was obtained.
Further, 58.3 parts by mass of water was added and sufficiently stirred to obtain an aqueous dispersion of a urethane resin, and then the aqueous dispersion was subjected to aging and desolvation to obtain the urethane resin (1) having a non-volatile content of 50% by mass.

(Production Example 2: Synthesis of Urethane Resin (2))

In a reaction vessel, 69.0 parts by mass of the polyester polyol (3) of Synthesis Example 3 was dehydrated under a reduced pressure at 100°C, then cooled to 80°C, and 93.3 parts by mass of methyl ethyl ketone was added thereto, followed by stirring and uniform mixing. Next, 3.0 parts by mass of 1,4-butanediol and 6.1 parts by mass of 2,2-dimethylol propionic acid were added, and then 19.4 parts by mass of tolylene diisocyanate was added, and the mixture was reacted at 80°C for 12 hours to perform a urethanation step. After finding that the isocyanate value became 0.1% or less, 0.3 parts by mass of n-butanol was added, a reaction was further performed for 2 hours, followed by cooling to 50°C, and a hydrophilic group-containing polyurethane resin (II) having a non-volatile content of 51.0% was obtained. Next, 4.6 parts by mass of triethylamine was added to the hydrophilic group-containing polyurethane resin (II), and 353 parts by mass of ion-exchanged water was slowly added to make the hydrophilic group-containing polyurethane resin (II) water-soluble. Next, methyl ethyl ketone was removed under a reduced pressure at 30°C to 50°C to prepare the urethane resin (2) having a non-volatile content of 23.0%.

(Production Example 3: Synthesis of Urethane Resin (3))

In a reaction vessel, 63.0 parts by mass of the polyester polyol (3) of Synthesis Example 3 was dehydrated under a reduced pressure at 100°C, then cooled to 80°C, and 98.2 parts by mass of methyl ethyl ketone was added thereto, followed by stirring and uniform mixing. Next, 3.6 parts by mass of 1,4-butanediol and 6.1 parts by mass of 2,2-dimethylol propionic acid were added, then 29.7 parts by mass of tolylene diisocyanate was added, and the mixture was reacted at 80°C for 12 hours to perform a urethanation step, thereby obtaining the hydrophilic group-containing polyurethane resin (II) having an isocyanate equivalent of 853 and a non-volatile content of 51.0%. Next, 11.4 g of acetyl acetone was charged in 2 parts such that a reaction temperature did not exceed 80°C. After initial heat generation was stopped, a reaction was performed at 60°C for 10 hours, followed by cooling to a room temperature when a peak of NCO groups (around 2270 cm$^{-1}$) disappeared in an infrared absorption spectrum (IR measurement), and a blocked isocyanate polyurethane resin (1) was obtained.
Next, 4.8 parts by mass of triethylamine was added to the blocked isocyanate polyurethane resin (1), and 363 parts by mass of ion-exchanged water was slowly added to make the blocked isocyanate polyurethane resin (1) water-soluble. Next, methyl ethyl ketone was removed under a reduced pressure at 30°C to 50°C to prepare the urethane resin (3) having a non-volatile content of 23.0%.

(Example 1: Synthesis of Latex Composite Urethane Resin (1))

To 270 parts by mass of the urethane resin (1) obtained in Production Example 1, 151 parts by mass of ion-exchanged water was added, 23.0 parts by mass of isoprene and 34.6 parts by mass of glycidyl methacrylate were allowed to react using 0.3 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (1) having a solid content of 48%.

(Example 2: Synthesis of Latex Composite Urethane Resin (2))

To 193 parts by mass of the urethane resin (1) obtained in Production Example 1, 188 parts by mass of ion-exchanged water was added, 76.8 parts by mass of isoprene and 19.2 parts by mass of glycidyl methacrylate were allowed to react using 0.5 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (2) having a solid content of 45%.

(Example 3: Synthesis of Latex Composite Urethane Resin (3))

To 270 parts by mass of the urethane resin (1) obtained in Production Example 1, 151 parts by mass of ion-exchanged water was added, 11.5 parts by mass of isoprene and 46.1 parts by mass of glycidyl methacrylate were allowed to react using 0.3 parts of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (3) having a solid content of 48%.

(Example 4: Synthesis of Latex Composite Urethane Resin (4)) - for reference and/or comparison only

To 321 parts by mass of the urethane resin (2) obtained in Production Example 2, 126 parts by mass of ion-exchanged water was added, 31.7 parts by mass of butadiene was allowed to react using 0.3 parts of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (4) having a solid content of 25%.

(Example 5: Synthesis of Latex Composite Urethane Resin (5))

To 193 parts by mass of the urethane resin (1) obtained in Production Example 1, 188 parts by mass of ion-exchanged water was added, 19.2 parts by mass of isoprene, 48.0 parts by mass of glycidyl methacrylate, and 28.8 parts of butyl acrylate were allowed to react using 0.5 parts of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (5) having a solid content of 45%.

(Example 6: Synthesis and Blending of Latex Composite Urethane Resin (6))

To 353 parts by mass of the urethane resin (3) obtained in Production Example 3, 91 parts by mass of ion-exchanged water was added, 34.8 parts of isoprene was allowed to react using 0.3 parts of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (6) having a solid content of 25%.

(Example 7: Synthesis of Latex Composite Urethane Resin (7))

To 270 parts by mass of the urethane resin (1) obtained in Production Example 1, 151 parts by mass of ion-exchanged water was added, 11.5 parts of isoprene, 28.8 parts by mass of methyl methacrylate, and 17.3 parts by mass of glycidyl methacrylate were allowed to react using 0.3 parts of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (7) having a solid content of 48%.

(Comparative Example 1: Synthesis of Latex Composite Urethane Resin (8))

To 230 parts by mass of the urethane resin (2) obtained in Production Example 2, 196 parts by mass of ion-exchanged water was added, 2.6 parts by mass of isoprene and 28.8 parts by mass of methyl methacrylate were allowed to react using 0.3 parts of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (8) having a solid content of 25%.

(Comparative Example 2: Synthesis of Latex Composite Urethane Resin (9))

To 230 parts by mass of the urethane resin (2) obtained in Production Example 2, 196 parts by mass of ion-exchanged water was added, 2.6 parts by mass of isoprene, 7.9 parts of methyl methacrylate, and 42.2 parts by mass of butyl acrylate were allowed to react using 0.3 parts of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (9) having a solid content of 25%.

(Comparative Example 3: Synthesis of Latex Composite Urethane Resin (10))

To 193 parts by mass of the urethane resin (1) obtained in Production Example 1, 188 parts by mass of ion-exchanged water was added, 4.8 parts by mass of isoprene, 14.4 parts by mass of methyl methacrylate, and 76.8 parts by mass of butyl acrylate were allowed to react using 0.5 parts of ammonium persulfate (APS) under the condition of monomer batch emulsion polymerization (reaction temperature: 70°C), then concentration for unreacted monomers was performed, and the water content was adjusted, thereby obtaining a latex composite urethane resin (10) having a solid content of 45%.

(Tests for Adhesiveness of Dissimilar Base Materials)

"Adhesiveness of Dissimilar Base Materials":

An unvulcanized raw rubber base material having thiol was attached to a surface of PET to which a coating was performed and dried at 140°C for 20 seconds, and compression bonding was performed at about 100°C. The PET cooled after the compression bonding and the raw rubber base material were peeled off, and the state of the peeled base material was observed.

A: The material of the PET or the raw rubber base material was broken. Alternatively, the PET and the raw rubber base material were not peeled off.
B: Although the adhesiveness between the PET and the raw rubber base material was found, an adhesive layer remained only on either the base material of the PET or the raw rubber base material.
C: The adhesiveness between the PET and the raw rubber base material was hardly found, and the adhesive layer remained only on either the base material of the PET or the raw rubber base material.

[Table 1]

| | Example | | | | | | | Comparative Example | | |
|---|---|---|---|---|---|---|---|---|---|---|
| | 1 | 2 | 3 | 4* | 5 | 6 | 7 | 1 | 2 | 3 |
| Latex composite urethane resin 1 | 100 | | | | | | | | | |
| Latex composite urethane resin 2 | | 100 | | | | | | | | |
| Latex composite urethane resin 3 | | | 100 | | | | | | | |
| Latex composite urethane resin 4 | | | | 100 | | | | | | |
| Latex composite urethane resin 5 | | | | | 100 | | | | | |
| Latex composite urethane resin 6 | | | | | | 100 | | | | |
| Latex composite urethane resin 7 | | | | | | | 100 | | | |
| Latex composite urethane resin 8 | | | | | | | | 100 | | |
| Latex composite urethane resin 9 | | | | | | | | | 100 | |
| Latex composite urethane resin 10 | | | | | | | | | | 100 |
| Ratio of urethane | 70 | 50 | 70 | 70 | 50 | 70 | 70 | 50 | 50 | 50 |
| Ratio synthetic rubber latex | 30 | 50 | 30 | 30 | 50 | 30 | 30 | 50 | 50 | 50 |
| Urethane Tg | -53 | -53 | -53 | 8 | -53 | 8 | -53 | 8 | 8 | -53 |
| Synthetic rubber latex Tg | -15 | -57 | 12 | -80 | -16 | -75 | 33 | 89 | -32 | -32 |
| Determination | A | B | A | B | A | A | A | C | C | C |
| * for reference and/or comparison only | | | | | | | | | | |

Examples 1 to3 and 5 to 7 were examples of the invention, and the adhesiveness between dissimilar base materials, particularly between a rubber base material and a resin base material was good.

Comparative Examples 1 to 3 were examples in which a composite resin having no group capable of reacting with a -SH group was used, and the adhesiveness between the dissimilar base materials was poor.

## Claims

1.   An aqueous resin composition, comprising:

a composite resin (A); and
an aqueous medium (B),
wherein
the composite resin (A) contains a vinyl polymer (A1) and a urethane resin (A2),
the vinyl polymer (A1) contains a unit derived from a conjugated diene compound,
the composite resin (A) has a group reactive with a -SH group,
the urethane resin (A2) has a content of 1 part by mass or more and 100 parts by mass or less relative to 1 part by mass of the vinyl polymer (A1),
the total content of the vinyl polymer (A1) and the urethane resin (A2) in the composite resin (A) is 70% by mass or more and the upper limit is 100% by mass, and
the content of the composite resin (A) in the aqueous resin composition is 20% by mass or more and is 60% by mass or less.

2.   The aqueous resin composition according to claim 1, wherein
the vinyl polymer (A1) has a group reactive with a -SH group.

3.   The aqueous resin composition according to claim 1 or 2, wherein
the urethane resin (A2) has a weight average molecular weight of 5,000 or more and 500,000 or less, the weight average molecular weight being measured by gel permeation chromatography using polystyrene as a standard sample.

4.   An adhesive comprising:
the aqueous resin composition according to any one of claims 1 to 3.

5.   The adhesive according to claim 4, which is an adhesive for rubber.

## Patentansprüche

1.   Wässrige Harzzusammensetzung, umfassend:

ein Verbundharz (A); und
ein wässriges Medium (B),
wobei
das Verbundharz (A) ein Vinylpolymer (A1) und ein Urethanharz (A2) enthält,
das Vinylpolymer (A1) eine Einheit enthält, die von einer konjugierten Dienverbindung abgeleitet ist,
das Verbundharz (A) eine Gruppe aufweist, die mit einer -SH-Gruppe reaktiv ist,
das Urethanharz (A2) einen Gehalt von 1 Masseteil oder mehr und 100 Masseteile oder weniger, bezogen auf 1 Masseteil des Vinylpolymers (A1), aufweist,
der Gesamtgehalt des Vinylpolymers (A1) und des Urethanharzes (A2) in dem Verbundharz (A) 70 Massenprozent oder mehr und die Obergrenze 100 Massenprozent beträgt, und
der Gehalt des Verbundharzes (A) in der wässrigen Harzzusammensetzung 20 Massenprozent oder mehr und 60 Massenprozent oder weniger beträgt.

2.   Wässrige Harzzusammensetzung nach Anspruch 1, wobei
das Vinylpolymer (A1) eine mit einer -SH-Gruppe reaktive Gruppe aufweist.

3.   Wässrige Harzzusammensetzung nach Anspruch 1 oder 2, wobei

das Urethanharz (A2) ein gewichtsmittleres Molekulargewicht von 5.000 oder mehr und 500.000 oder weniger aufweist, wobei das gewichtsmittlere Molekulargewicht durch Gelpermeationschromatographie unter Verwendung von Polystyrol als Standardprobe gemessen wird.

**4.** Klebstoff, umfassend:
die wässrige Harzzusammensetzung gemäß einem der Ansprüche 1 bis 3.

**5.** Klebstoff gemäß Anspruch 4, der ein Klebstoff für Gummi ist.

**Revendications**

**1.** Composition de résine aqueuse, comprenant :

une résine composite (A) ; et
un milieu aqueux (B),
dans laquelle
la résine composite (A) contient un polymère vinylique (A1) et une résine uréthane (A2),
le polymère vinylique (A1) contient une unité dérivée d'un composé diénique conjugué,
la résine composite (A) comporte un groupe réactif avec un groupe -SH,
la résine uréthane (A2) a une teneur comprise entre 1 partie en masse et 100 parties en masse par rapport à 1 partie en masse du polymère vinylique (A1),
la teneur totale en polymère vinylique (A1) et en résine uréthane (A2) dans la résine composite (A) est de 70% en masse ou plus et la limite supérieure est de 100% en masse, et
la teneur en résine composite (A) dans la composition de résine aqueuse est de 20% en masse ou plus et est de 60% en masse ou moins.

**2.** Composition de résine aqueuse selon la revendication 1, dans laquelle
le polymère vinylique (A1) comporte un groupe réactif avec un groupe -SH.

**3.** Composition de résine aqueuse selon la revendication 1 ou 2, dans laquelle
la résine uréthane (A2) a un poids moléculaire moyen en poids de 5 000 ou plus et de 500 000 ou moins, le poids moléculaire moyen en poids étant mesuré par chromatographie par perméation de gel en utilisant du polystyrène comme échantillon standard.

**4.** Adhésif comprenant :
la composition de résine aqueuse selon l'une quelconque des revendications 1 à 3.

**5.** Adhésif selon la revendication 4, qui est un adhésif pour caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3067399 A1
- JP H06199968 A
- JP 2004231852 A
- JP 2004224868 A

**Non-patent literature cited in the description**

- *Bulletin of the American Physical Society, Series 2,* 1956, vol. 1 (3), 123